Europäisches Patentamt

European Patent Office

Office européen des brevets

(11) Numéro de publication: **0 320 349**
A1

## (12) DEMANDE DE BREVET EUROPEEN

(21) Numéro de dépôt: 88403051.1

(22) Date de dépôt: 02.12.88

(51) Int. Cl.⁴: **F 24 D 13/02**
F 24 D 3/16

(30) Priorité: 04.12.87 FR 8716891
23.06.88 FR 8808461

(43) Date de publication de la demande:
14.06.89 Bulletin 89/24

(84) Etats contractants désignés:
AT BE CH DE ES FR GB GR IT LI LU NL SE

(71) Demandeur: Scherrer, Fernand
2, rue Georges Bizet
F-68170 Rixheim (FR)

Rousset, Joseph
22 Rue des Ecoles
F-75005 Paris (FR)

(72) Inventeur: Scherrer, Fernand
2, rue Georges Bizet
F-68170 Rixheim (FR)

Rousset, Joseph
22 Rue des Ecoles
F-75005 Paris (FR)

(74) Mandataire: Bruder, Michel
Cabinet Michel Bruder 10, rue de la Pépinière
F-75008 Paris (FR)

(54) **Dispositif de climatisation d'un local à échange d'énergie calorifique par rayonnement infrarouge basse température.**

(57) Un dispositif de climatisation d'un local à échange d'énergie calorifique par rayonnement infrarouge basse température comprend un élément plan (5) échangeur d'énergie calorifique par, rayonnement infrarouge basse température s'étendant parallèlement à une paroi de la pièce, à distance de celle ci.

Pour améliorer le rendement et le confort de la pièce, le dispositif comprend, entre l'élément échangeur d'énergie calorifique (5) et la paroi (2), un élément (4) réfléchissant le rayonnement infrarouge basse température et, du côté de l'intérieur de cette pièce, une nappe (6) tendue en travers de la pièce, en une matériau se comportant de manière diathermane au rayonnement infrarouge basse température, l élément (5) échangeur d'énergie calorifique, l'élément (4) réfléchissant ce rayonnement et la nappe (6) étant accrochés, le long de leurs bords à des parois de la pièce.

Fig.1

Bundesdruckerei Berlin

**Description**

La présente invention concerne un dispositif de climatisation d'un local à échange d'énergie calorifique par rayonnement infrarouge basse température.

Les dispositifs d'échange d'énergie calorifique avec un environnement à une température différente qui sont actuellement utilisés sont essentiellement du type utilisant le mode convection. Les dispositifs à circuit fermé assurent presque exclusivement le chauffage tandis que les dispositifs à circuit ouvert (air pulsé) peuvent assurer le chauffage et/ou le refroidissement de locaux d'habitation ou industriels. D'autres dispositifs à film chauffant utilisent l'électricité comme source d'énergie et ils assurent un échange d'énergie calorifique par rayonnement. Toutefois ces dispositifs ne peuvent à l'évidence qu'assurer le chauffage des locaux et leur emploi s'en trouve donc forcément limité.

On utilise déjà pour le chauffage de pièces de bâtiments, des éléments de chauffage par rayonnement infrarouge basse température. Les éléments émetteurs utilisés sont généralement constitués par des feuilles ou des films qui sont fixés à un mur ou à un plafond par agrafage ou collage au moyen de bandes adhésives. Ces éléments émetteurs de rayonnement infrarouge basse température sont en contact avec un matelas isolant les séparant de la paroi et ils sont recouverts, du côté de l'intérieur de la pièce d'un habillage avec lequel ils sont en contact. Cet habillage peut être constitué par un plafond rapporté sur la face supérieure duquel s'étend l'émetteur de rayonnement infrarouge basse température.

Un tel dispositif de chauffage s'il offre l'avantage de produire un flux de rayonnement infrarouge basse température réparti régulièrement sur toute la surface de la pièce, n'en présente pas moins l'inconvénient que sa mise en oeuvre est une opération relativement complexe, exigeant des temps de main d'oeuvre relativement longs. Par ailleurs d'une part le rendement thermique n'est pas constant du fait des propriétés d'absorption du rayonnement du matériau constituant l'habillage ou le plafond rapporté, ce qui fausse les calculs de la puissance à installer, et d'autre part la subsistance d'une lame d'air entre les divers éléments compromet le rendement et est responsable de dégradations des matériaux utilisés par surchauffe.

La présente invention vise à remédier à ces inconvénients en procurant un dispositif de conception particulièrement simple, de faible encombrement et poids, à haut rendement énergétique et pouvant assurer la climatisation de locaux en étant utilisé indifféremment comme émetteur ou absorbeur d'énergie calorifique.

A cet effet ce dispositif de climatisation d'un local à échange d'énergie calorifique par rayonnement infrarouge basse température, comprenant un élément plan échangeur d'énergie calorifique par rayonnement infrarouge basse température, s'étendant parallèlement à une paroi de la pièce, à distance de celle-ci est caractérisé en ce qu'il comprend entre l'élément échangeur d'énergie calorifique et la paroi, un élément réfléchissant de rayonnement infrarouge basse température et, du côté de l'intérieur de cette pièce, une nappe tendue en travers de la pièce, en un matériau se comportent de manière diathermane au rayonnement infrarouge basse température l'élément échangeur d'énergie calorifique l'élément réfléchissant ce rayonnement et la nappe étant accrochés, le long de leurs bords à des parois de la pièce.

Suivant une forme d'exécution particulièrement avantageuse l'élément échangeur est constitué par un panneau de faible épaisseur, de l'ordre du millimètre traversé de part en part de canaux internes parallèles juxtaposés, jointifs ou non à section droite de faible dimension (de type capillaire), dont les parois étanches de faible épaisseur sont constituées par un matériau de faible densité et de deux canalisations formant respectivement collecteur et distributeur de fluide parallèles et adjacentes aux deux extrémités du panneau où se trouvent les extrémités ouvertes des canaux internes juxtaposés de celui-ci, ces deux extrémités étant raccordées d'une manière étanche à deux fentes longitudinales en regard des deux canalisations formant collecteur et distributeur, lesquelles sont reliées en circuit fermé à une source de fluide caloporteur ou frigoporteur de manière à assurer la circulation permanente de ce fluide à travers les canaux du panneau, de la canalisation formant distributeur à la canalisation formant collecteur.

Si le fluide qui circule dans le panneau est à une température supérieure à celle de l'environnement, il cède de l'énergie calorifique au profit de cet environnement, essentiellement par rayonnement et le dispositif assure alors le chauffage du local. Par contre si le fluide est à une température inférieure à celle de l'environnement il reçoit de l'énergie calorifique à partir de celui-ci et le dispositif contribue alors au refroidissement du local.

Pour que le panneau assurant l'échange d'énergie calorifique avec l'environnement fonctionne essentiellement suivant le mode rayonnement, on fait en sorte que le solide constitué par ce panneau soit du type à petit nombre de Biot, c'est-à-dire que le coefficient de rayonnement linéarisé et le rapport de son volume sur sa surface d'échange soient les plus petits possible pour un coefficient de conductivité le plus grand possible.

Le panneau est avantageusement constitué par deux feuilles parallèles de polymère ou de métal, de faible masse volumique, reliées entre elles par des cloisons minces formant entretoises et délimitant les canaux internes du panneau qui peuvent avoir une section droite carrée, rectangulaire circulaire ou autre.

Comme le dispositif suivant l'invention est par nature fragile, du fait de sa très faible épaisseur vis-à-vis des agressions volontaires ou involontaires du type chocs, coupures, percements accidentels, usure par frottement, il est particulièrement avantageux de l utiliser d une manière protégée en le logeant, dans un local, à distance d'une paroi (mur ou plafond) du local, en interposant entre le panneau échangeur de chaleur et la paroi un élément réfléchissant le rayonnement vers l'intérieur du local et en tendant, du coté de l'intérieur de ce local une nappe parallèle à la paroi et en un matériau perméable au rayonnement.

On décrira ci-après à titre d'exemples non limitatifs diverses formes d'exécution de la présente invention en référence au dessin annexé sur lequel:

La figure 1 est une vue en coupe verticale de la partie supérieure d'une pièce d'une bâtiment dans laquelle est installé un dispositif de chauffage suivant l'invention parallèlement au plafond de la pièce.

La figure 2 est une vue en coupe verticale partielle à plus grande échelle montrant un mode d'accrochage des trois éléments constitutifs du dispositif de chauffage aux murs de la pièce.

La figure 3 est une vue en plan d'un dispositif d'accrochage de l'élément émetteur.

La figure 4 est une vue en plan partielle montrant un dispositif d'accrochage du film réflecteur aux murs de la pièce.

La figure 5 est une vue en coupe verticale partielle illustrant le dispositif d'accrochage du film réflecteur de la figure 4.

La figure 6 est une vue en coupe verticale de la partie supérieure d'un local d'un bâtiment dans lequel est installé un dispositif de climatisation suivant l'invention, parallèlement au plafond du local.

La figure 7 est une vue en plan du dispositif d'échange d'énergie calorifique proprement dit.

La figure 8 est une vue en coupe verticale faite suivant la ligne VIII-VIII de la figure 7.

La figure 9 est une vue en coupe verticale à plus grande échelle faite suivant la ligne IX-IX de la figure 7.

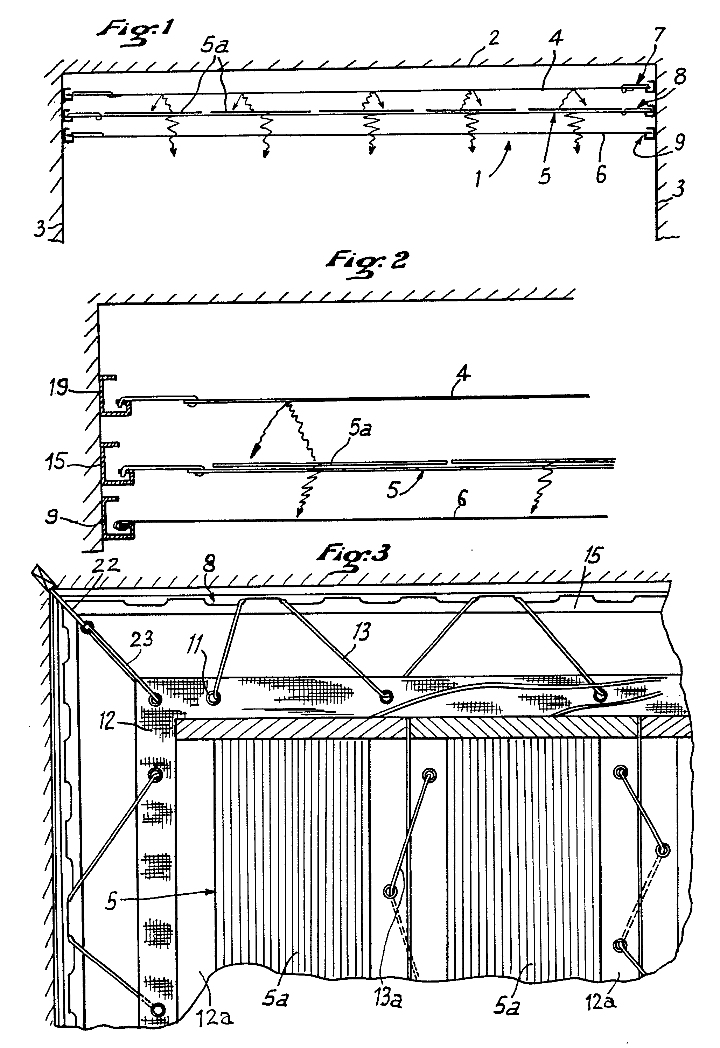

Le dispositif de climatisation suivant l'invention qui est indiqué dans son ensemble par la référence 1 sur la figure 1, est, dans cette forme d'exécution non limitative un dispositif de chauffage qui s'étend horizontalement en dessous du plafond 2 de la pièce à chauffer, entre les murs 3 de cette pièce Ce montage n'est toutefois pas limitatif et le dispositif de chauffage 1 pourrait aussi bien s'étendre verticalement, parallèlement à un mur 3.

Le dispositif de chauffage 1 comprend trois éléments superposés à savoir, de haut en bas, un élément réfléchissant supérieur 4 un élément intermédiaire 5 émetteur de rayonnement infrarouge basse température et un élément inférieur 6 constitué par une nappe tendue, en toile ou matière plastique, constituant un faux plafond esthétique pour la pièce. Les trois éléments superposés 4, 5, 6, sont accrochés le long de leurs bords respectifs aux murs 3 par l'intermédiaire de dispositifs 7, 8, 9.

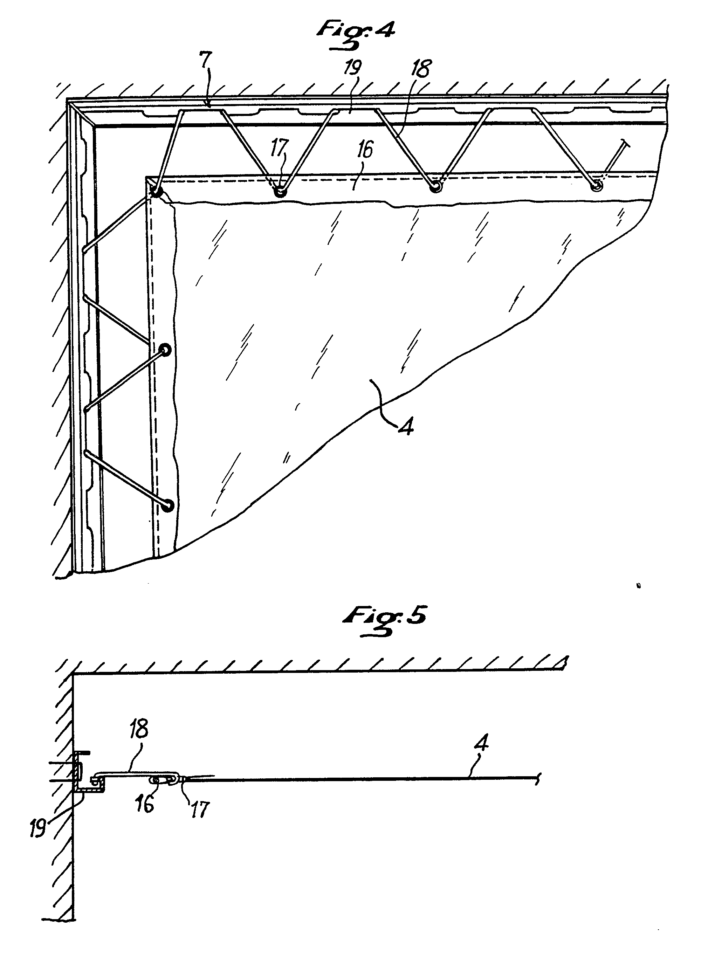

L'élément intermédiaire 5 émetteur de rayonnement peur être constitué par tout matériau disponible actuellement dans le commerce. Un tel élément émetteur 5 est représenté sur la figure 3. Cet élément émetteur 5 est constitué de films individuels juxtaposés 5a qui sont adaptés en vue de leur fixation aux murs 3. A cet effet ils sont munis d'accessoires d'assemblage dans les zones réservées à la fixation. Ces accessoires comprennent des oeillets métalliques 11 sertis dans des perforations effectués dans des bandes 12 situées à la périphérie de l'ensemble des films 5a et dans des bandes 12a entourant chaque film individuel 5a, ces bandes 12, 12a étant réservées à la fixation. Les bandes périphériques 12, 12a sont avantageusement constituées par une toile ou tout autre matériau incombustible. Les oeillets 11 ont un diamètre approprié et ils sont répartis à une distance les uns des autres telle qu'ils permettent une liaison, au moyen de liens 13a, élastiques ou rigides des bandes périphériques 12a, des films émetteurs individuels juxtaposés 5a entre eux, pour former une nappe, et sur le périmètre d'assemblage au moyen d'autres liens 13, entre les bandes périphériques 12 et un dispositif d'accrochage quelconque 8 fixé sur les murs de la pièce. Ce dispositif d'accrochage peut être constitué par une lisse continue 15 en forme d'équerre accrochée au mur par son aile verticale et dont l'aile horizontale dentelée sert à l'accrochage des liens 13 de l élément émetteur 5. Toutefois cet accrochage pourrait être également réalisé à partir de points d'accrochage individuels distants les uns des autres sur le mur 3.

Des points individuels d'accrochage 22 et leurs liens 23 sont conçus pour résister et continuer à maintenir accrochés aux parois les éléments 5 et par voie de conséquence retenir l'élément réfléchissant 4 en cas d'incendie.

Un autre type d'assemblage consiste à fixer les films émetteurs individuels 5a sur une toile incombustible (par exemple en fibres de verre, de carbone etc) dont la trame permet un passage optimal du rayonnement infrarouge mais dont la nature et la dimension de la maille sont telles qu'en cas d'incendie des films émetteurs 5a l'association par collage ou soudage des films émetteurs 5a sur la toile support incombustible limite la propagation de la flamme et évite la chute de matière en fusion sur les occupants des locaux, par rétention dans les mailles du tissage de la toile. Un traitement par rétention de produit ignifuge dans le fil constituant le tissage peut rendre cet assemblage auto-extinguible et améliorer sensiblement son comportement au feu.

Les figures 4 et 5 illustrent un mode d'accrochage de l'élément réfléchissant supérieur 4 aux murs 3 de la pièce. Cet élément réfléchissant supérieur 4 est constitué par un film ou un tissage faisant intervenir des composants tels que son coefficient de réflexion (pour un rayonnement électromagnétique situé, dans le spectre électromagnétique dans la bande d'émission dite de l'infrarouge proche soit entre 0,6 micromètre et 12 micromètres environ), soit maximal pour une température d'émission allant de 30oC à 70oC. Le film réflecteur 4 présente sur son pourtour un élément de renfort 16 percé, à des distances appropriées, de trous dans lesquels sont sertis des oeillets 17 et à travers ces oeillets passe un lien élastique ou rigide 18 s'étendant jusqu'à un dispositif d accrochage 7 fixé aux murs 3 Ce dispositif d'accrochage peut être consitué par une lisse continue 19 du même type que la lisse 15 servant à l'accrochage de l'élément émetteur de rayonnement 5. Toutefois le film réflecteur 4 pourrait être accroché par tout moyen approprié à des points d'accrochage individuels répartis sur les murs.

La nappe suspendue inférieure 6 peur être constituée par une toile ou une feuille de matière plastique disponible dans le commerce. Elle est accrochée, le long de son bord aux murs 3 par l'intermédiaire d'une lisse 9 fixée aux murs 3, de la manière habituelle.

Les lisses 19, 15, 9 servant à l'accrochage des trois éléments superposés 4, 5, 6 peuvent être séparées les unes des autres, comme il est représenté sur le dessin, ou bien encore elles peuvent entre constituées d'un seul et même profilé.

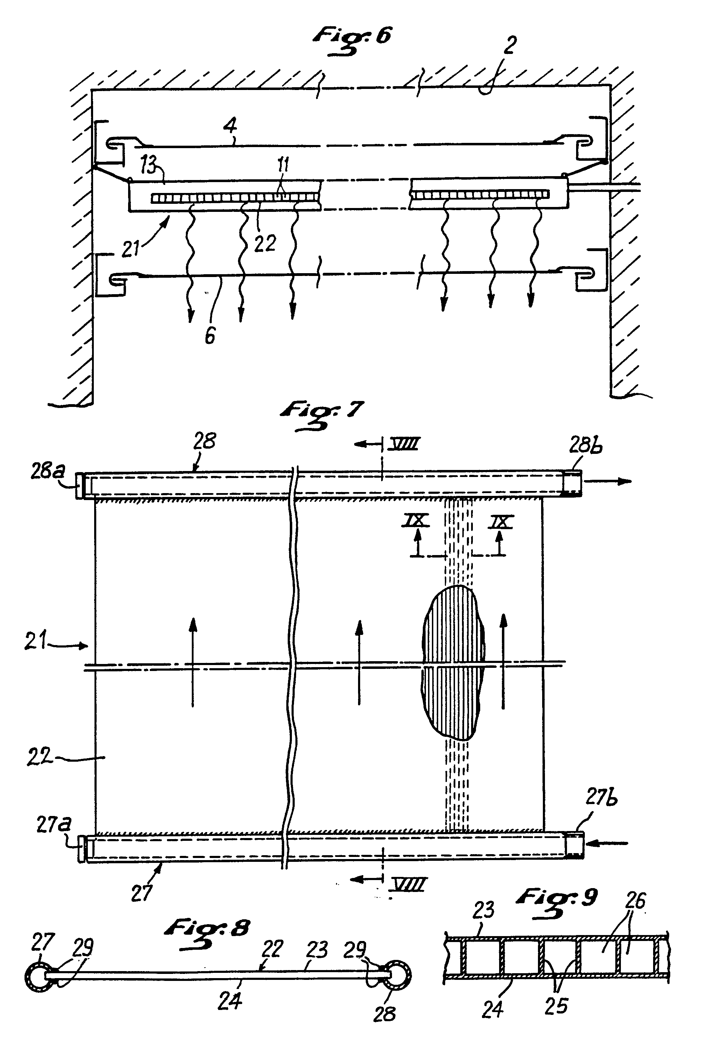

Dans la variante d'exécution représentée sur les figures 6 à 9 le dispositif suivant l'invention assure la climatisation, c'est-à-dire le chauffage et/ou refroidissement de la pièce dans laquelle il est monté. Il comporte essentiellement un échangeur d'énergie calorifique plan 21 s'étendant horizontalement, c'est-à-dire parallèlement au plafond 2, en étant interposé entre l'élément réflecteur supérieur plan 4 et la nappe tendue inférieure plane 6 également parallèle au plafond 2.

L'échangeur d'énergie calorifique 21 est constitué par un panneau 22 de très faible épaisseur de l'ordre du millimètre. Ce panneau est formé de deux feuilles minces parallèles 23, 24 en un polymère ou métal de faible masse volumique, et qui sont reliées entre elles par des cloisons minces 25 parallèles entre elles formant entretoises. Ces cloisons délimitent entre elles, des canaux 26 qui traversent de part en part le panneau et sont ouverts à leurs deux extrémités opposées. Dans la forme d'exécution non limitative représentée sur le dessin, les canaux 26 ont une section droite carrée mais ils pourraient avoir aussi bien une section droite rectangulaire, circulaire ou outre. Les deux bords opposés du panneau 22 où se trouvent les orifices des canaux internes 26 sont engagés respectivement dans deux canalisations 27, 28 fermées à l'une de leurs extrémités 27a, 28a et ouvertes à leurs autres extrémités 27b, 28b pour pouvoir être raccordées, en circuit fermé, à une installation de circulation d'un fluide caloporteur ou frigoporteur, liquide ou gazeux. Dans l'exemple illustré sur le dessin la canalisation 27 est celle par laquelle est introduit le fluide et elle constitue par conséquent le distributeur tandis que l'autre canalisation 28 joue le rôle de collecteur, le trajet de fluide dans l'échangeur étant indiqué par les flèches. Les deux bords opposés du panneau 22 sont engagés dans des fentes longitudinales ménagées dans les parois des deux canalisations 27, 28 et la fixation est réalisée d'une manière étanche, au moyen de joints 29.

Le fluide caloporteur ou frigoporteur qui peut être un liquide ou un gaz approprié du commerce, est chauffé ou refroidi à l'extérieur du local par un quelconque dispositif de transformation de l'énergie connu tel que chaudière pompe à chaleur groupe frigorifique avec pompe de circulation etc... Il est possible de faire varier la quantité d'énergie échangée entre le dispositif suivant l'invention et son environnement pour une surface d'échangeur installé donnée, en faisant varier la vitesse de circulation du fluide et/ou sa température.

Comme il est représenté sur la figure 6, l'échangeur de chaleur 21 est avantageusement interposé entre l'élément réflecteur supérieur 4 et la nappe inférieure 6 qui est réalisée en un matériau perméable au rayonnement. L'échan geur de chaleur 21, l'élément réfléchissant supérieur 4 et la nappe tendue inférieure 6 sont accrochés aux murs de la pièce par tous moyens appropriés.

Naturellement, du fait que le dispositif suivant l'invention est relativement fragile du fait de l'utilisation d'un panneau très mince, il est préférable de la réaliser sous la forme d'unités de petits dimensions qui sont raccordées les unes aux autres pour couvrir toute la surface d'un plafond ou d'un mur d'une pièce. Par ailleurs il est judicieux de prévoir des moyens tels qu'un filet pour soutenir l'ensemble des unités de climatisation individuelles formant le dispositif échangeur calorifique de grande étendue.

## Revendications

1.- Dispositif de climatisation d'un local à échange d'énergie calorifique par rayonnement infrarouge basse température comprenant un élément plan (5, 21) échangeur d'énergie calorifique par rayonnement infrarouge basse température, s'étendant parallèlement à une paroi de la pièce, à distance de celle-ci, caractérisé en ce qu'il comprend, entre l'élément échangeur d'énergie calorifique (5, 21) et la paroi (2), un élément (4) réfléchissant le rayonnement infrarouge base température et, du coté de l'intérieur de cette pièce, une nappe (6) tendue en travers de la pièce en un matériau se comportant de manière diathermane au rayonnement infrarouge basse température l'élément (5) échangeur d'énergie calorifique l'élément (4) réfléchissant ce rayonnement, et la nappe (6) étant accrochés, le long de leurs bords à des parois de la pièce.

2.- Dispositif suivant la revendication 1 caractérisé en ce que l'élément réfléchissant supérieur (4) est constitué par un film ou un tissage faisant intervenir des composants tels que son coefficient de réflexion (pour un rayonnement électromagnétique situé, dans le spectre électromagnétique, dans la bande d'emission dite de l'infrarouge proche, soit entre 0,6 micromètre et 12 micromètres environ) soit maximal pour une température d'émission allant de 30oC à 70oC.

3.- Dispositif suivant la revendication 2 caractérisé en ce que le film réflecteur (4) présente, sur son pourtour un élément de renfort (16) percé, à des distances appropriées, de trous dans lesquels sont sertis des oeillets (17) et à travers ces oeillets passe un lien élastique ou rigide (18) et/ou incombustible s'étendant jusqu'à un dispositif d'accrochage (19) fixé aux parois de la pièce.

4.- Dispositif suivant l'une quelconque des revendications précédentes caractérisé en ce que les dispositifs d'accrochage (7, 8, 9) des trois éléments superposés (4, 5, 6) sont constitués par des lisses continues (19, 15, 9) fixées aux parois de la pièce, ces lisses étant indépendantes les unes des autres ou formant un seul et même profilé.

5.- Dispositif suivant l'une quelconque des revendications 1 à 3 caractérisé en ce que les dispositifs d'accrochage (7, 8, 9) des trois éléments superposés (4, 5, 6) sont constitués chacun par des organes d'accrochage individuels fixés sur les parois, à distance les uns des autres.

6.- Dispositif suivant l'une quelconque des revendications précédentes caractérisé en ce que l'élément plan (5) échangeur d'énergie calorifique est une émetteur de rayonnement infrarouge basse température.

7.- Dispositif suivant la revendication 6 caractérisé en ce que l'élément émetteur (5) est constitué de films individuels juxtaposés (5a) qui sont fixés les uns aux autres pour former une nappe.

8.- Dispositif suivant la revendication 7 caracté risé en ce que bandes périphériques (12) entourant l'ensemble des films individuels (5a) sont percées de trous dans lesquels sont sertis des oeillets métalliques (11) permettant le passage de liens (13) élastiques ou rigides assurant la liaison de l'ensemble de la nappe constituée par les films individuels (5a) avec un dispositif d'accrochage (15) fixé sur les parois de la pièce.

9.- Dispositif suivant la revendication 8 caractérisé en ce des bandes périphériques (12a) entourant respectivement les films individuels (5a)sont percées de trous dans lesquels sont sertis des oeillets métalliques (11) permettant le passage de liens (13a) élastiques ou rigides assurant la liaison des films émetteurs individuels (5a) entre eux.

10.- Dispositif suivant la revendication 7 caractérisé en ce que les films émetteurs individuels (5a) sont fixés sur une toile incombustible dont la trame permet un passage optimal du rayonnement infrarouge mais dont la nature et la dimension de la maille sont telles qu'en cas d'incendie des films émetteurs (5a) l'association par collage ou soudage des films émetteurs (5a) sur la toile support incombustible limite la propagation de la flamme et évite la chute de matière en fusion sur les occupants des locaux par rétention dans les mailles du tissage de la toile.

11.- Dispositif suivant l'une quelconque des revendications 7 à 10 caractérisé en ce que des points individuels d'accrochage(22) et leurs liens (23) sont conçus pour résister et continuer à maintenir accrochés aux parois l'élément émetteur (5) et par voie de conséquence retenir l'élément réfléchissant (4) en cas d'incendie.

12.- Dispositif suivant l'une quelconque des revendications 1 à 5 caractérisé en ce que l'élément échangeur d'énergie calorifique (21), est constitué par un panneau (22) de faible épaisseur de l'ordre du millimètre, traversé de part en part de canaux internes (26) parallèles juxtaposés, jointifs ou non, à section droite de faibles dimensions (de type capillaire), dont les parois étanches, de faible épaisseur sont constituées par un matériau de faible densité, et de deux canalisations (27, 28) formant respectivement collecteur et distributeur de fluide, parallèles et adjacentes aux deux extrémités du panneau (22) où se trouvent les extrémités ouvertes des canaux internes juxtaposés de celuici, ces deux extrémités étant raccordées d'une manière étanche à deux fentes longitudinales en regard des deux canalisations (27, 28) formant collecteur et distributeur lesquelles sont reliées en circuit fermé à une source de fluide caloporteur ou frigoporteur de manière à assurer la circulation permanente de ce fluide à travers les canaux du panneau (22), de la canalisation (27) formant distributeur à la canalisation (28) formant collecteur.

Fig.1

Fig.2

Fig.3

*Fig. 4*

*Fig. 5*

**Fig. 6**

**Fig. 7**

**Fig. 8**

**Fig. 9**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 354 091 (BAIN)<br>* colonne 3, lignes 25-39 *<br>--- | 1 | F 24 D 13/02<br>F 24 D 3/16 |
| A | DE-U-6 914 558 (BLASBAND)<br>* revendications 1,2 *<br>--- | 1 | |
| A | DE-A-2 202 208 (ROCHOLL)<br>* page 3, paragraphes 1-5 *<br>--- | 1 | |
| A | DE-A-2 310 119 (TOMBU)<br>* figures 5,6, références 2,3 *<br>--- | 4 | |
| A | DE-A-3 026 098 (STOCK)<br>* page 2, dernier paragraphe *<br>--- | 8 | |
| A | BE-A- 902 995 (ELAN APS)<br>* pages 1,2 *<br>--- | 12 | |
| A | DE-A-3 546 408 (ENGEL-BAZION)<br>* colonne 4, lignes 26-39 *<br>----- | 12 | |

**DOMAINES TECHNIQUES RECHERCHES (Int. Cl.4)**

F 24 D 3/00
F 24 D 5/00
F 24 D 13/00
F 24 D 19/00
F 24 H 9/00
F 28 F 3/00
F 28 F 21/00

Le présent rapport a été établi pour toutes les revendications

| Lieu de la recherche | Date d'achèvement de la recherche | Examinateur |
|---|---|---|
| BERLIN | 08-03-1989 | PIEPER C |